# EUROPEAN PATENT SPECIFICATION

(11) **EP 2 343 224 B1**
(45) Date of publication and mention of the grant of the patent: **13.08.2014**
(21) Application number: 11150202.7
(22) Date of filing: 05.01.2011
(51) Int. Cl.: B60T 7/06, B60T 11/18, G05G 1/32

(54) **Vehicle operating pedal device**
Fahrzeugbetriebspedalvorrichtung
Dispositif de pédale de fonctionnement de véhicule

(30) Priority: 07.01.2010 JP 2010002324
(43) Date of publication of application: 13.07.2011
(73) Proprietor: Toyoda Iron Works Co., Ltd., Toyota-shi, Aichi 471-8507 (JP)
(72) Inventor: Mori, Yoshihiko c/o TOYODA IRON WORKS CO., LTD., Toyota-shi, Aichi 471-8507 (JP)
(74) Representative: TBK

(56) References cited:
- EP-A2- 0 928 726
- EP-A2- 1 724 170
- JP-A- 2006 103 501

## Description

### INCORPORATION BY REFERENCE

The disclosure of Japanese Patent Application No. 2010-002324 filed on January 7, 2010 including the specification, drawings and abstract is incorporated herein by reference in its entirety.

### BACKGROUND OF THE INVENTION

### Field of the Invention

The invention relates to a vehicle operating pedal device, and particularly to improvement of a vehicle operating pedal device in which an operating pedal is supported so that the operating pedal is pivotable around a first axis, and the first axis extends in a vehicle width direction and is inclined in a top-bottom direction.

### Description of the Related Art

A vehicle operating pedal device comprising (a) a pedal support, (b) an operating pedal, and (c) a connecting rod is widely used for a service brake pedal device, a clutch pedal device, or the like. The pedal support is integrally fixed to a dash panel. The operating pedal is supported by the pedal support so as to be pivotable around a predetermined first axis O1. The operating pedal is pivoted around the first axis O1 upon an operation of depressing a pedal sheet provided at a lower end thereof by a driver. The connecting rod protrudes into a vehicle compartment from an output unit that is disposed outside the vehicle compartment at a position on an opposite side of the dash panel from the pedal support. The connecting rod is mechanically connected to the operating pedal. The connecting rod is mechanically moved in an axial direction thereof according to the operation of depressing the operating pedal. A device described in Japanese Patent Application Publication No. 2007-156989 (JP-A-2007-156989) is one example of the vehicle operating pedal device. Another is described in EP 0 928 726 A2. In the device described in the publication No. 2007-156989, the connecting rod is directly connected to the operating pedal so that the operating pedal is relatively pivotable. In addition, the first axis O1 extends in a vehicle width direction and is inclined in a top-bottom direction, in order to avoid interference with a steering device or the like.

However, in the vehicle operating pedal device in which the first axis O1 extends in the vehicle width direction and is inclined in the top-bottom direction, a portion of the operating pedal, which is located near the first axis O1, extends in a direction substantially orthogonal to the first axis O1. As the first axis O1 becomes further from a centerline S of the output unit in a top-bottom direction, a boss portion of the operating pedal is displaced in the vehicle width direction. Therefore, the boss portion may interfere with a member near the boss portion. Also, when the output unit is fixed from the inside of the vehicle compartment using threads or the like, the boss portion may interfere with a fixing tool. For example, in the publication No. 2007-156989, the connecting rod is connected to an intermediate position in the operating pedal, and therefore, the first axis O1 is positioned above the centerline S of the output unit (i.e., a brake booster). Accordingly, the boss portion of the operating pedal is displaced in the vehicle width direction with respect to the centerline S of the output unit. Therefore, for example, in the case where a plurality of attachment threads are provided around the centerline S of the output unit, and the output unit is integrally fixed to a dash panel by fastening thread members to the attachment threads from the inside of the vehicle compartment, a fastening tool used to fasten the thread members may interfere with the boss portion or the like of the operating pedal, and as a result, it may become impossible to perform an operation of fastening the thread member.

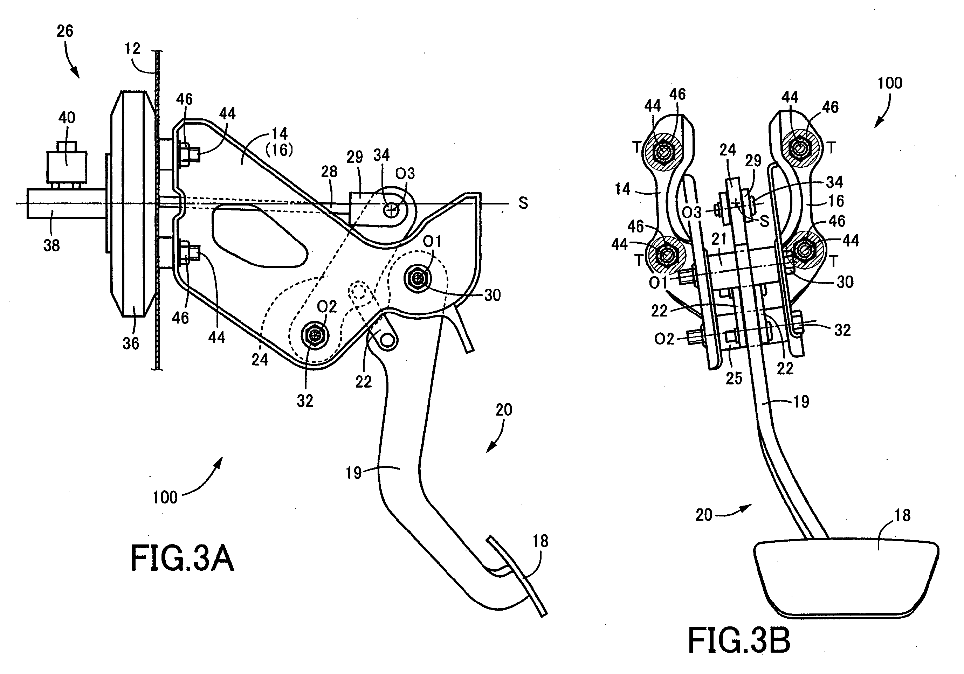

A brake pedal device 100 in FIGS. 3A and 3B comprises (a) paired pedal supports 14 and 16 integrally fixed to a dash panel 12; (b) an operating pedal 20 supported by the pedal supports 14 and 16 through a boss portion 21 so as to be pivotable around the first axis O1, and pivoted around the first axis O1 upon an operation of depressing a pedal sheet 18 provided at a lower end thereof by a driver; (c) an intermediate lever 24 disposed ahead of the operating pedal 20 in a vehicle, supported by the pedal supports 14 and 16 through a boss portion 25 so as to be pivotable around a second axis 02 parallel to the first axis O1, connected to the operating pedal 20 through a connecting link 22, and mechanically pivoted around the second axis 02 according to the operation of depressing the operating pedal 20; and (d) a connecting rod 28 protruding into a vehicle compartment from an output unit 26 disposed outside the vehicle compartment at a position on an opposite side of the dash panel 12 from the pedal supports 14 and 16, connected to the intermediate lever 24 so as to be relatively pivotable around a third axis 03 parallel to the first axis O1, and mechanically moved in an axial direction thereof according to the operation of depressing the operating pedal 20.

An upper end portion of the operating pedal 20 is supported so that the operating pedal 20 is pivotable around the first axis O1. At least an upper portion of a pedal arm 19 extends in a direction substantially orthogonal to the first axis O1. A lower end portion of the intermediate lever 24 is supported so that the intermediate lever 24 is pivotable around the second axis 02. An upper end portion of the intermediate lever 24 is connected to a clevis 29 of the connecting rod 28 at the substantially same position as the centerline S of the output unit 26 so that the intermediate lever 24 is relatively pivotable around the third axis 03. An intermediate portion of the operating pedal 20 is connected to an intermediate portion of the intermediate lever 24 by the connecting link 22 so that the operating pedal 20 and the intermediate lever 24 are relatively pivotable. The connecting rod 28 connected to the intermediate lever 24 is mechanically pressed toward a front side of the vehicle according to the operation of depressing the operating pedal 20. Thus, braking force is mechanically generated according to depressing operating force. The first axis O1 is an axis (shaft center) of a support bolt 30 that supports the operating pedal 20. The second axis 02 is an axis (shaft center) of a support bolt 32 that supports the intermediate lever 24. The third axis 03 is an axis (shaft center) of a connecting pin 34. The first axis O1, the second axis 02, and the third axis 03 are parallel to each other. Each of the first axis O1, the second axis 02, and the third axis 03 extends in the vehicle width direction and is inclined in the top-bottom direction. In this case, each of the first axis O1, the second axis 02, and the third axis 03 is inclined at an inclination angle within a range between approximately from 5° to 10° to extend upward from a left side to a right side. FIG. 3A is a left side view, and FIG. 3B is a front view seen from the right side in FIG. 3A. The output unit 26 is constituted by a brake booster 36, a brake master cylinder 38, a reservoir tank 40, and the like.

The first axis O1 is positioned below the centerline S of the output unit 26. If a connecting position at which the connecting rod 28 is connected to the intermediate lever 24 is located substantially on the centerline S in the vehicle width direction, the boss portion 21, which is provided in the pedal arm 19 of the operating pedal 20 and is disposed coaxially with the first axis O1, is displaced rightward of the vehicle with respect to the centerline S. In the output unit 26, a plurality of (four in FIG. 3B) bolts (attachment threads) 44 are provided around the centerline S to extend in parallel with the centerline S. The bolts 44 extend through the dash panel 12 and the pedal support 14 or 16 to protrude into the vehicle compartment. The output unit 26 and the pedal supports 14 and 16 are integrally fixed to the dash panel 12 by fastening nut members 46(thread members) to the bolts 44 from the inside of the vehicle compartment. In this case, because the boss portion 21 of the operating pedal 20 is displaced rightward in the vehicle, the head portion of the support bolt 30 used to attach the boss portion 21 to the pedal supports 14 and 16 may overlap with a tool space T (shown by hatching) which is a space required to fasten the nut member 46 to the bolt 44 at a lower right position, and as a result, it may become impossible to perform the fastening operation.

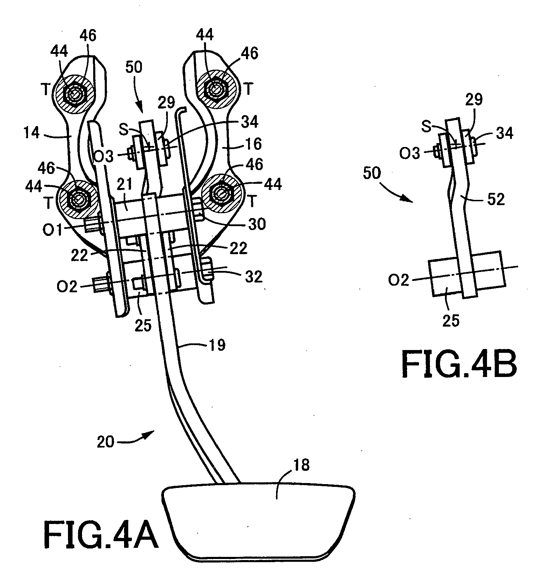

In contrast, for example, in the case where a step portion 52 with a crank shape is provided at the intermediate portion of an intermediate lever 50 as shown in FIGS. 4A and 4B, the operating pedal 20 and the boss portion 21 thereof can be displaced leftward in FIGS. 4A and 4B. Thus, it is possible to avoid the situation where the support bolt 30 overlaps the tool space T. Accordingly, it is possible to perform the operation of fastening the nut members 46 to all the bolts 44 at four positions. However, it is necessary to employ the intermediate lever 50 that includes the step portion 52 with the crank shape. As a result, manufacturing cost is increased, and there is disadvantage in strength. The publication No. 2007-156989 also describes an example of the operating pedal device, in which a step portion is provided in the pedal arm of the operating pedal. The example of the operating pedal device has the same problems. FIG. 4A is a front view corresponding to FIG. 3B. FIG. 4B is a front view showing the intermediate lever 50 taken out from the front view in FIG. 4A.

It is conceivable to rotate the output unit 26 around the centerline S in accordance with the inclination of the operating pedal 20, instead of employing the above-described intermediate lever 50 that includes the step portion 52. However, design needs to be changed, for example, a connecting position at which the output unit 26 is connected to the reservoir tank 40 needs to be changed. It is conceivable to change only the position(s) of the bolt(s) 44 of the output unit 26. However, in this case as well, the design of the output unit 26 needs to be changed. Therefore, it is not preferable to change the position(s) of the bolt(s) 44 of the output unit 26.

### SUMMARY OF THE INVENTION

The invention has been made under such circumstances and an object of the invention is to prevent a boss portion or the like of an operating pedal from overlapping a tool space T or interfering with a member near the boss portion or the like, using simple means, without providing a step portion in the operating pedal or an intermediate lever, or changing design of an output unit, in a vehicle operating pedal device in which the operating pedal is supported so that the operating pedal is pivotable around a first axis O1, and the first axis O1 extends in a vehicle width direction and is inclined in a top-bottom direction.

### MEANS FOR SOLVING THE PROBLEM

To achieve the object, the first aspect of the invention, comprising that (a) a pedal support integrally fixed to a dash panel; (b) an operating pedal supported by the pedal support so as to be pivotable around a predetermined first axis (O1), and pivoted around the first axis (O1) upon an operation of depressing a pedal sheet provided at a lower end thereof by a driver; (c) an intermediate lever disposed ahead of the operating pedal in a vehicle, supported by the pedal support so as to be pivotable around a second axis (02) parallel to the first axis (O1), connected to the operating pedal through a connecting link, and mechanically pivoted around the second axis (02) according to the operation of depressing the operating pedal; and (d) a connecting rod protruding into a vehicle compartment from an output unit disposed outside the vehicle compartment at a position on an opposite side of the dash panel from the pedal support, connected to the intermediate lever so as to be relatively pivotable around a third axis (03) parallel to the first axis (O1), and mechanically moved in an axial direction thereof according to the operation of depressing the operating pedal; (e) each of the first axis (O1), the second axis (02), and the third axis (03), which are parallel to each other, extending in a vehicle width direction and inclined in a top-bottom direction; and (f) an intersection of a pedal arm of the operating pedal and the first axis (O1) being positioned on or near a centerline (S) of the output unit.

The intersection of the pedal arm of the operating pedal and the first axis O1 may be positioned near the centerline S. This signifies that the intersection does not necessarily need to be positioned on the centerline S, as long as the boss portion or the like of the operating pedal does not overlap with a tool space T or interfere with a member near the boss portion or the like. More specifically, the intersection may be positioned at a distance equal to or shorter than 10 mm from the centerline S in each of a top-bottom direction and a right-left direction. It is preferable that the intersection should be located at the substantially same position as the centerline S in the right-left direction of the vehicle. It is more preferable that the intersection should be positioned at a distance equal to or shorter than 5 mm from the centerline S in the right-left direction, in order to suppress twisting or the like due to the offset of the intersection from the centerline S.

The second aspect of the invention, in the vehicle operating pedal device recited in the first aspect of the invention, wherein (a) the output unit is integrally fixed to the dash panel by fastening thread members to a plurality of attachment threads provided around the centerline (S), from an inside of the vehicle compartment; and (b) the intersection of the pedal arm of the operating pedal and the first axis (O1) is positioned on or near the centerline (S) so that each of tool spaces (T) required to perform an operation of fastening the thread members does not overlap with the operating pedal when the vehicle operating pedal device is viewed in a direction parallel to the centerline (S).

### EFFECTS OF THE INVENTION

In the brake pedal device, the intersection of the pedal arm of the operating pedal and the first axis O1 is positioned on or near the centerline S of the output unit. Therefore, the boss portion of the operating pedal is also positioned at or near as to substantially intersect with the centerline S of the output unit. Thus, although the first axis O1 extends in the vehicle width direction and is inclined in the top-bottom direction, the boss portion is hardly displaced in the vehicle width direction. This reduces the possibility that the situation where the boss portion of the operating pedal, or the like overlaps with at least one of the tool spaces T that are required when the respective thread members are fastened to the plurality of attachment threads is provided around the centerline S of the output unit to extend in parallel with the centerline S. Also, positions and the like of various members are determined based on the centerline S. This reduces the possibility that the boss portion or the like of the operating pedal interferes with a member near the boss portion or the like. That is, it is possible to prevent the boss portion or the like of the operating pedal from overlapping with the tool space T, or interfering with a member near the boss portion or the like, using simple means, without providing a step portion in the operating pedal or the intermediate lever, or changing the design of the output unit.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIGS. 1A and 1B are views each showing an example of a vehicle brake pedal device for a service brake, to which the invention is applied, FIG. 1A being a left side view, and FIG. 1B being a front view seen from a right side in FIG. 1A;
FIG. 2 is a front view in which a portion of an operating pedal and a portion of a connecting link in FIG. 1B are cut out to show an intermediate lever, FIG. 2 being a view corresponding to a section taken along a line II-II in FIG. 1A;
FIGS. 3A and 3B are views each showing a comparative example compared with the vehicle brake pedal device to which the invention is appropriately applied, FIGS. 3A and 3B corresponding to FIGS. 1A and 1B, respectively; and
FIGS. 4A and 4B are views used to explain a case where a step portion is provided in an intermediate lever to avoid a situation where the head portion of a support bolt of an operating pedal overlaps with a tool space T in the comparative example in FIGS. 3A and 3B, FIG. 4A being a front view corresponding to FIG. 3B, and **FIG.** 4B being a front view showing the intermediate lever taken out from the front view in FIG. 4A.

### DETAILED DESCRIPTION OF EMBODIMENTS

The invention is appropriately applied to a brake pedal device for a service brake. However, the invention may be applied to an operating pedal device for a clutch, an accelerator, or a parking brake. Examples of an output unit include a brake booster, a brake master cylinder, and a clutch master cylinder. The output unit is configured to mechanically generate an output corresponding to depressing operating force through hydraulic pressure or the like. However, it is possible to employ an electrical output unit (an output unit of a by-wire type) that detects the depressing operating force using a load sensor or the like, and electrically controls wheel brakes, a clutch, and the like.

For example, an upper end portion of an operating pedal is supported so that the operating pedal is pivotable around a first axis O1. An intermediate portion of the operating pedal is connected to an intermediate lever through a connecting link. However, the intermediate portion of the operating pedal in the upper-lower direction may be supported so that the operating pedal is pivotable around the first axis 01, and the upper end portion of the operating pedal may be connected to the intermediate lever through the connecting link.

For example, a lower end portion of the intermediate lever is supported so that the intermediate lever is pivotable around a second axis 02. An upper end portion of the intermediate lever is connected to a connecting rod at the substantially same position as a centerline S of the output unit so that the intermediate lever is relatively pivotable around a third axis 03. An intermediate portion of the intermediate lever in the upper-lower direction is connected to the operating pedal through the connecting link. However, the intermediate portion of the intermediate lever may be supported so that the intermediate lever is pivotable around the second axis 02, the lower end portion of the intermediate lever may be connected to the connecting rod at the substantially same position as the centerline S of the output unit so that the intermediate lever is relatively pivotable around the third axis 03, and the upper end portion of the intermediate lever may be connected to the operating pedal through the connecting link. Also, the upper end portion of the intermediate lever may be supported so that the intermediate lever is pivotable around the second axis 02, the intermediate portion of the intermediate lever may be connected to the connecting rod at the substantially same position as the centerline S of the output unit so that the intermediate lever is relatively pivotable around the third axis 03, and the lower end portion of the intermediate lever may be connected to the operating pedal through the connecting link. Thus, various forms may be employed.

The connecting link connects the operating pedal with the intermediate lever. The connecting link is connected to the operating pedal as well as to the intermediate lever using a link pin or the like so that the connecting link is relatively pivotable around an axis parallel to the first axis O1 respectively. The connecting link is also connected to the intermediate lever using a link pin or the like so that the connecting link is relatively pivotable around an axis parallel to the first axis O1. Examples of the connecting rod may include an operating rod of a brake booster, and a push rod of a master cylinder. The connecting rod is connected to the intermediate lever through a clevis or the like so that the connecting rod is relatively pivotable around the third axis 03.

In the output unit, for example, a plurality of attachment threads are provided around the centerline S. The output unit is integrally fixed to a dash panel by fastening thread members to the attachment threads from the inside of a vehicle compartment. For example, bolts that serve as the attachment threads are provided to extend in parallel with the centerline S. The bolts extend through the dash panel and a pedal support to protrude into the vehicle compartment. The output unit and the pedal support are integrally fixed to the dash panel by fastening nut members to the bolts from the inside of the vehicle compartment. Screw holes that serve as the attachment threads may be provided in the output unit, and the output unit may be fixed to the dash panel by screwing bolts into the screw holes from the inside of the vehicle compartment. The output unit and the pedal support may be separately fixed to the dash panel. Also, when the first aspect of invention is implemented, the output unit does not necessarily need to be fixed by fastening the thread members from the inside of the vehicle compartment. The output unit may be fixed to the dash panel, a vehicle body, or the like by fastening the thread members from the outside of the vehicle compartment. In this case as well, it is possible to obtain the advantageous effect of easily preventing a boss portion or the like of the operating pedal from interfereing with a member near the boss portion or the like, by applying the invention.

The invention is appropriately applied to the vehicle operating pedal device in which the connecting rod is pushed toward a front side of a vehicle upon performing the operation of depressing the operating pedal. However, the invention may be applied to a vehicle operating pedal device in which the connecting rod is pulled toward a rear side of the vehicle upon performing the operation of depressing the operating pedal. Also, the pedal support that supports the operating pedal and the intermediate lever may be constituted by a single member or a plurality of members.

### Embodiment

Hereinafter, an embodiment of the invention will be described in detail with reference to the drawings. In the embodiment described below, a case where the invention is applied to the vehicle brake pedal device for a service brake in FIGS. 3A and 3B described above will be described. In this case, the same or corresponding members are denoted by the same reference numerals, and the detailed description thereof will be omitted.

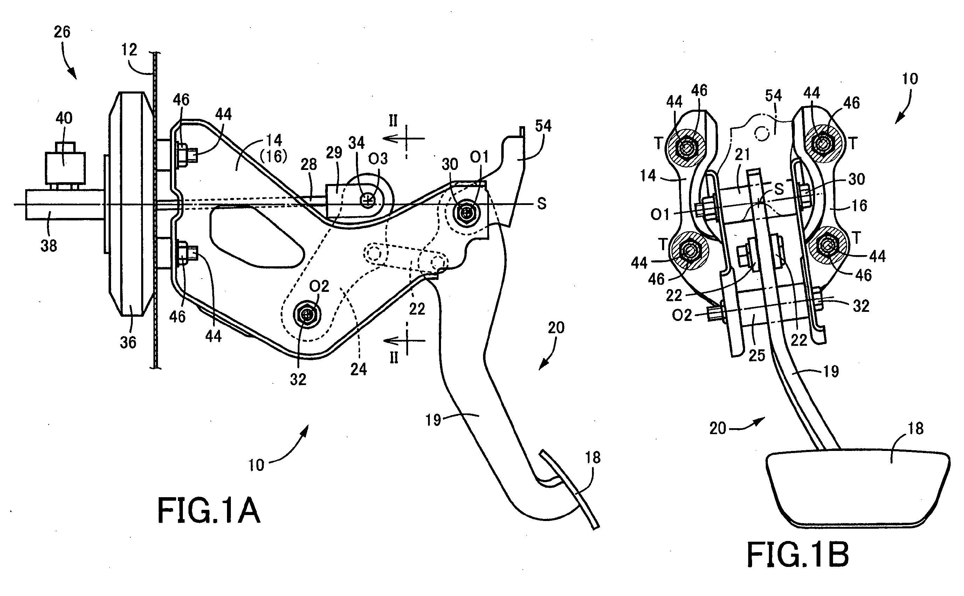

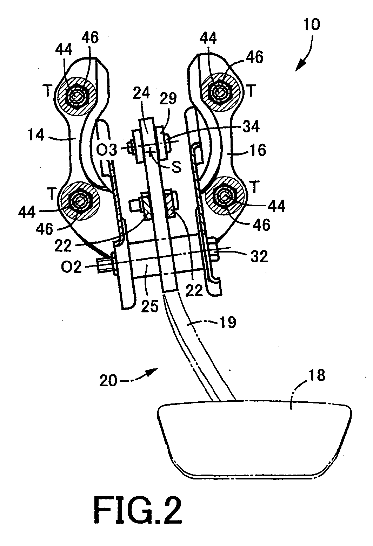

FIG. 1A and FIG. 1B correspond to FIG. 3A and FIG. 3B described above, respectively. FIG. 1A is a left side view of a brake pedal device 10 in the embodiment. FIG. 1B is a front view seen from a right side in FIG. 1A. FIG. 2 is a front view in which a portion of the operating pedal 20 and a portion of the connecting link 22 in FIG. 1B are cut out to show the intermediate lever 24. FIG. 2 is a view corresponding to a section taken along a line II-II in FIG. 1A. The brake pedal device 10 shown in FIGS. 1A and 1B and FIG. 2 differs from the brake pedal device 100 in FIGS. 3A and 3B described above in that the first axis O1, around which the operating pedal 20 is pivotably supported, is provided at such a height position as to substantially intersect with the centerline S of the output unit 26. In the embodiment, in the front view in FIG. 1B seen in a direction parallel to the centerline S, an intersection of the pedal arm 19 of the operating pedal 20 and the first axis O1 is located substantially on the centerline S of the output unit 26 so that the boss portion 21 of the operating pedal20, the support bolt 30, or the like does not overlap with the tool space T required to perform the operation of fastening the nut member 46. The support bolt 30, which supports the operating pedal 20, is supported by a second pedal support 54 fixed to a vehicle body, for example, at an instrument panel reinforcement in addition to the above-described pedal supports 14 and 16.

In the brake pedal device 10, the first axis O1 is located at such a height position as to substantially intersect with the centerline S of the output unit 26. More specifically, the operating pedal 20 is disposed so that the intersection of the pedal arm 19 and the first axis O1 is located substantially on the centerline S. Therefore, the boss portion 21 of the operating pedal 20 is positioned at such a height as to substantially intersect with the centerline S. Thus, although the first axis O1 extends in the vehicle width direction and is inclined in the top-bottom direction, the boss portion 21 is hardly displaced in the vehicle width direction. This avoids the situation where the boss portion 21 of the operating pedal 20, the support bolt 30, or the like overlaps with at least one of the tool spaces T that are required when the respective nut members 46 are fastened to the plurality of bolts 44 provided around the centerline S of the output unit 26 to extend in parallel with the centerline S. Also, positions and the like of various members are determined based on the centerline S. This reduces the possibility that the boss portion 21 or the like of the operating pedal 20 interferes with a member near the boss portion 21 or the like. That is, it is possible to prevent the boss portion 21 or the like of the operating pedal 20 from overlapping with the tool space T, or interfering with a member near the boss portion 21 or the like, using simple means, without providing a step portion in the operating pedal 20 or the intermediate lever 24, or changing the design of the output unit 26.

Although the embodiment of the invention has been described in detail with reference to the drawings, the embodiment is merely an example, and the invention can be implemented in various forms obtained by altering or modifying the embodiment based on the knowledge of those skilled in the art.
A vehicle operating pedal device (10) comprises a pedal support (14, 16) integrally fixed to a dash panel (12), an operating pedal (20) supported by the pedal support so as to be pivotable around a predetermined first axis (O1), and pivoted around the first axis upon an operation of depressing a pedal sheet (18) provided at a lower end thereof by a driver, an intermediate lever (24) disposed ahead of the operating pedal in a vehicle, supported by the pedal support so as to be pivotable around a second axis (02) parallel to the first axis, connected to the operating pedal through a connecting link (22), and mechanically pivoted around the second axis according to the operation of depressing the operating pedal, and a connecting rod (28) protruding into a vehicle compartment from an output unit (26) disposed outside the vehicle compartment at a position on an opposite side of the dash panel from the pedal support, connected to the intermediate lever so as to be relatively pivotable around a third axis (03) parallel to the first axis, and mechanically moved in an axial direction thereof according to the operation of depressing the operating pedal, each of the first axis, the second axis, and the third axis, which are parallel to each other, extends in a vehicle width direction and are inclined in a top-bottom direction, and an intersection of a pedal arm (19) of the operating pedal and the first axis is positioned on or near a centerline (S) of the output unit.

## Claims

1. A vehicle operating pedal device (10) comprising;
a pedal support (14, 16) integrally fixed to a dash panel (12);
an operating pedal (20) supported by the pedal support so as to be pivotable around a predetermined first axis (O1), and pivoted around the first axis upon an operation of depressing a pedal sheet (18) provided at a lower end thereof by a driver;
an intermediate lever (24) disposed ahead of the operating pedal in a vehicle, supported by the pedal support so as to be pivotable around a second axis (02) parallel to the first axis, connected to the operating pedal through a connecting link (22), and mechanically pivoted around the second axis according to the operation of depressing the operating pedal; and
a connecting rod (28) protruding into a vehicle compartment from an output unit (26) disposed outside the vehicle compartment at a position on an opposite side of the dash panel from the pedal support, connected to the intermediate lever so as to be relatively pivotable around a third axis (03) parallel to the first axis, and mechanically moved in an axial direction thereof according to the operation of depressing the operating pedal; **characterized by** that
each of the first axis, the second axis, and the third axis, which are parallel to each other, extending in a vehicle width direction and inclined in a top-bottom direction; and
an intersection of a pedal arm (19) of the operating pedal and the first axis being positioned on or near a centerline (S) of the output unit.

2. The vehicle operating pedal device according to claim 1, wherein
the output unit is integrally fixed to the dash panel by fastening thread members (46) to a plurality of attachment threads (44) provided around the centerline (S), from an inside of the vehicle compartment; and
the intersection of the pedal arm of the operating pedal and the first axis (O1) is positioned on or near the centerline so that each of tool spaces (T) required to perform an operation of fastening the thread members does not overlap with the operating pedal when the vehicle operating pedal device is viewed in a direction parallel to the centerline.

## Patentansprüche

1. Fahrzeugbetätigungspedalvorrichtung (10) mit:
einer Pedalstütze (14, 16), die einstückig an einer Trennwand (12) fixiert ist;
einem Betätigungspedal (20), das mittels der Pedalstütze gestützt ist, um so um eine vorherbestimmte erste Achse (O1) schwenkbar zu sein, und um die erste Achse auf eine Betätigung eines Herunterdrückens einer Pedalplatte (18) durch einen Fahrer, die an einem unteren Ende davon vorgesehen ist, geschwenkt wird;
einem Zwischenhebel (24), der vor dem Betätigungspedal in einem Fahrzeug eingerichtet ist, mittels der Pedalstütze gestützt ist, um so um eine zweite Achse (02), parallel zu der ersten Achse, schwenkbar zu sein, über ein Verbindungsstück (22) mit dem Betätigungspedal verbunden ist und gemäß der Betätigung eines Herunterdrückens des Betätigungspedals mechanisch um die zweite Achse geschwenkt wird; und
einem Verbindungsstab (28), der n einen Fahrzeuginnenraum von einer Ausgabeeinheit (26), die außerhalb des Fahrzeuginnenraums an einer Position an einer entgegengesetzten Seite der Trennwand eingerichtet ist von der Pedalstütze hineinragt, mit dem Zwischenhebel verbunden ist, um so relativ um eine dritte Achse (03), parallel zu der ersten Achse, schwenkbar zu sein und mechanisch in eine axiale Richtung davon gemäß der Betätigung eines Herunterdrückens des Betätigungspedals bewegt wird; **dadurch gekennzeichnet, dass**
jede von der ersten Achse, der zweiten Achse und der dritten Achse, die parallel zueinander sind, sich in eine Fahrzeugbreitenrichtung erstreckt und in eine Oben-/Untenrichtung geneigt ist; und
ein Kreuzpunkt eines Pedalarms (19) des Betätigungspedals und der ersten Achse an oder nahe einer Mittellinie (S) der Ausgabeeinheit positioniert ist.

2. Fahrzeugbetätigungspedalvorrichtung nach Anspruch 1, wobei
die Ausgabeeinheit einstückig mit der Trennwand mittels Befestigens von Schraubelementen (26) an eine Vielzahl von Befestigungsgewinden (44), die um die Mittellinie (S) vorgesehen sind, von einem Inneren des Fahrzeuginnenraums fixiert ist; und
der Kreuzpunkt des Pedalarms des Betätigungspedals und der ersten Achse (O1) an oder nahe der Mittellinie positioniert ist, so dass jeder von Werkzeugräumen (T), die erforderlich sind, um einen Anziehbetätigung der Schraubelemente durchzuführen, nicht mit dem Betätigungspedal überlappt, wenn die Fahrzeugbetätigungspedalvorrichtung in eine Richtung parallel zu der Mittellinie betrachtet wird.

## Revendications

1. Dispositif de pédale d'actionnement de véhicule (10) comprenant ;
un support de pédale (14, 16) fixé d'un seul tenant à un tablier (12) ;
une pédale d'actionnement (20) supportée par le support de pédale de manière à pouvoir pivoter autour d'un premier axe prédéterminé (01), et pivote autour du premier axe lors d'une opération d'appui faite par un conducteur sur une plaque de pédale (18) prévue au niveau d'une extrémité inférieure de celle-ci ;
un levier intermédiaire (24) disposé en avant de la pédale d'actionnement dans un véhicule, supporté par le support de pédale de manière à pouvoir pivoter autour d'un deuxième axe (02) parallèle au premier axe, relié à la pédale d'actionnement à travers une liaison de raccordement (22), et pivote mécaniquement autour du deuxième axe selon l'opération d'appui sur la pédale d'actionnement ; et
une bielle (28) faisant saillie dans un compartiment de véhicule à partir d'une unité de sortie (26) disposée à l'extérieur du compartiment de véhicule à une position sur un côté opposé du tablier à partir du support de pédale, reliée au levier intermédiaire de manière à pouvoir pivoter relativement autour d'un troisième axe (03) parallèle au premier axe, et se déplace mécaniquement dans une direction axiale de celle-ci selon l'opération d'appui sur la pédale d'actionnement ;
**caractérisé en ce que**
chacun parmi le premier axe, le deuxième axe et le troisième axe, qui sont parallèles les uns aux autres, s'étendant dans une direction de largeur du véhicule et étant incliné dans une direction de haut en bas ; et
une intersection d'un bras de pédale (19) de la pédale d'actionnement et du premier axe étant positionnée sur une ligne centrale (S) de l'unité de sortie ou à proximité de celle-ci.

2. Dispositif de pédale d'actionnement de véhicule selon la revendication 1, dans lequel
l'unité de sortie est fixée d'un seul tenant au tablier en fixant des éléments filetés (46) à une pluralité de filetages de rattachement (44) prévus autour de la ligne centrale (S), à partir d'une partie interne du compartiment de véhicule ; et
l'intersection du bras de pédale de la pédale d'actionnement et du premier axe (01) est positionnée sur la ligne centrale ou à proximité de celle-ci de sorte que chacun des espaces d'outil (T) requis pour effectuer une opération de fixation des éléments filetés ne se chevauche pas avec la pédale d'actionnement lorsque le dispositif de pédale d'actionnement de véhicule est vu dans une direction parallèle à la ligne centrale.
